# EUROPEAN PATENT SPECIFICATION

(11) **EP 3 741 996 B1**
(45) Date of publication and mention of the grant of the patent: **18.09.2024**
(21) Application number: 20168553.4
(22) Date of filing: 07.04.2020
(51) Int. Cl.: F04C 18/16, F04C 29/00, F04C 29/02, F04C 29/04

(54) **ROTARY SCREW COMPRESSOR**
ROTIERENDER SCHRAUBENKOMPRESSOR
COMPRESSEUR À VIS ROTATIVE

(30) Priority: 20.05.2019 CN 201910421109
(43) Date of publication of application: 25.11.2020
(73) Proprietor: Fusheng Industrial (Shanghai) Co., Ltd., Shanghai 201612 (CN)
(72) Inventor: PENG, Yung-Sheng, 241 New Taipei City (TW); WU, Yu-Feng, 114 Taipei City (TW); LIN, Feng-Yung, 23159 New Taipei City (TW)
(74) Representative: 2K Patentanwälte Blasberg Kewitz & Reichel

(56) References cited:
- EP-A1- 1 366 297
- EP-B1- 1 366 297
- GB-A- 2 376 505
- US-A- 3 922 114
- US-A1- 2007 241 627
- US-A1- 2019 063 438

## Description

### BACKGROUND OF THE INVENTION

### 1. Technical Field

The technical field relates to a compressor, and more particularly to a rotary screw compressor.

### 2. Description of Related Art

In general, a conventional rotary screw compressor comprises a compression chamber, a male rotor, a female rotor and a drive motor, and the male rotor and the female rotor are installed in the compression chamber and engaged with each other, and the drive motor comprises a motor housing and a drive shaft rotatably installed to the motor housing, and a bearing driving part is installed between the drive shaft and the male rotor for connecting their connection, so that the drive shaft can drive the male rotor to rotate through the bearing driving part, and the male rotor further drives the female rotor to rotate and jointly performing a compression operation.

However, it is necessary to connect the bearing driving part to the male rotor at the front end of the aforementioned drive shaft and have a bearing position between the rear end of the drive shaft and the motor housing, and the bearing driving part is a complicated component, so that the motor housing requires sufficient space to accommodate these components, and the volume of the rotary screw compressor cannot be reduced. In addition, it is necessary to lubricate the bearing at the rear end of the drive shaft, so that the coolant will flow through the bearing at the rear end of the drive shaft first and then into the compression chamber, but the coolant may permeate from the bearing at the rear end of the drive shaft into the motor housing and may cause an overheat or damage of the drive motor. Furthermore, the drive shaft drives the male rotate to rotate through the bearing driving part, and thus there is a transmission loss. US2019063438A1 discloses aa screw compressor with: a compressor body in which a screw rotor is accommodated in a rotor casing; a motor in which a rotator and a stator are accommodated in a motor chamber, the motor for rotationally driving a rotor shaft through use of a motor shaft; axial liquid supplying parts, provided on an anti-rotor side of the motor shaft; a motor shaft cooling part which is a cavity extending in the axial direction inside the motor shaft, the motor shaft cooling part for cooling the motor shaft by circulating a cooling liquid through the inside of the cavity thereof; and a liquid outlet part positioned on a rotor side of the motor shaft or a motor side of the rotor shaft and fluidically connected to the motor shaft cooling part so as to extend radially inward from an outlet opening formed in an outer surface of the motor shaft or the rotor shaft. GB2376505A provides as screw compressor assembly for compressed gas comprising a screw compressor having a casing and at least one pair of intermeshing helically formed screw rotors and each of which is mounted on a rotor shaft, rotatably mounted within the casing by means of bearings. Said assembly further comprises a switched reluctance motor comprising a stator attached to the casing and a rotor mounted on one of the motor shaftssuch that one of the screw rotors is driven directly by the motor. In operation a magnetic field is generated in the motor stator which causes the motor rotor to turn which rotates the driven compressor rotor. The motor rotor is displaced relative to the stator by a pre-determined axial distance x such that a resultant magnetic force is provided in an axial direction. US2007241627A1 discloses a compressor system utilizing direct rotational input from a permanent magnet motor to generate compressed air. The permanent magnet motor is mounted directly to an air screw compressor. The rotational input is provided by the permanent magnet motor to the air screw compressor without a gear train. The permanent magnet motor and associated variable speed drive controls the rotational speed of the permanent magnet motor and hence the screw compressor. Differing motors may selectively mount, and provide rotational input to, the air screw compressor. EP1366297A1 relates to a water-injected screw compressor, comprising a compressor element with a housing which borders a compression chamber in which two rotors are installed, which, by means of an axle ends, are borne in the housing by means of water-lubricated slide bearings, an electric motor comprising a housing which carries a stator at the inside, which stator surrounds a rotor with a rotor shaft. An axle end of one of the rotorsis directly coupled to or forms one piece with the rotor shaft of the motor, said rotor shaft being located in the prolongation of said axle end. The rotor shaft of the motor is borne in at least one water-lubricated slide bearing. The cooling water circuit extends through the motor housing which is provided with a number of mutually connected channels. By means of an inlet, these channels are in connection with a vessel under pressure, and they connect to injection points provided for the injection of water into the compression chamber.

US3922114A discloses a vertical rotary screw compressor, wherein the compressor assembly and the drive motor assembly are disposed in upright fashion with respect to each other. First axial fluid passage means are carried by the motor for passing compressed working fluid and entrained oil axially upward to cool the motor and for impingement against the upper end of the compressor discharge housing. Second axial fluid passage means return the compressor discharge, the separated oil and entrained oil axially downward to further cool the motor.

The present disclosure provides a feasible solution overcome drawbacks of the prior art

An object of the present invention is to provide a rotary screw compressor, wherein the pump components to pump the coolant for cooling the motor can be omitted and the structure and the volume of the rotary screw compressor is simplified.

Another object of the present invention is to provide a rotary screw compressor, wherein the deterioration of the mixed air due to a too fast flowing of the coolant through the drive motor assembly is prevented.

Still another object of the present invention is to provide a rotary screw compressor, wherein the volume of the compressor is reduced and the structure of the compressor is simplified, extending the service life of the drive motor assembly, and reducing the transmission loss.

In order to accomplish the objective of the present invention, there is provided a rotary screw compressor, according to claims 1 and 2.

### SUMMARY OF THE INVENTION

A rotary screw compressor is provided comprising a compressor assembly, comprising a compressor housing, a first screw rotor and a second screw rotor installed in the compressor housing and engaged with each other, an end of the first screw rotor having an engaging end, the compressor housing having a compression chamber for accommodating the first screw rotor and the second screw rotor, both ends of the first screw rotor and the second screw rotor have an air suction end and an air exhaust end respectively, and the first screw rotor and the second screw rotor have a first spiral groove and a second spiral groove from the air suction end respectively; a drive motor assembly comprising a motor housing and a motor rotor, a motor stator and a centering bushing installed in the motor housing, the motor stator being installed within the motor rotor and capable of driving the motor rotor to rotate, the centering bushing being coupled to the inner circumference of the motor rotor and having an end for accommodating the engaging end, so that the motor rotor can drive the first screw rotor to rotate through the centering bushing and the engaging end, and the motor housing having an inner surface, an outer surface, and a cooling passage disposed between the inner surface and the outer surface; a filling tube; a storage tank; and a guide tube; wherein the filling tube having an end communicating to the storage tank and the other end communicating to the cooling passage, the guide tube having an end communicating to the cooling passage and the other end communicating to the compression chamber.

According to the invention, the compressor housing has a first opening coupled between the compression chamber and the guide tube, the first opening is situated between the first spiral groove and the second spiral groove of any one of the first screw rotor and the second screw rotor, the cooling passage is a spiral flow channel, the spiral flow channel surrounds the outer periphery of the motor housing, the motor housing has a second opening and a third opening sequentially arranged in a direction away from the compressor assembly, the second opening is coupled between an end of the spiral flow channel and the filling tube, and the third opening is coupled between the other end of the spiral flow channel and the guide tube; wherein the compressor assembly and the drive motor assembly are disposed in upright fashion with respect to each other, and the storage tank has an internal pressure greater than the air pressure between the first spiral groove and the second spiral groove of any one of the first screw rotor and the second screw rotor, so that a coolant can be delivered sequentially from the storage tank, the filling tube, the cooling passage, the guide tube, and the first opening to the compression chamber by pressure difference, the coolant within the cooling passage can flow upwardly.

In an alternative solution of the invention, the cooling passage comprises two circular flow channels and a plurality of straight flow channels coupled between the two circular flow channels, the plurality of straight flow channels extend in a direction parallel to axis of the motor housing, the motor housing has a second opening and a third opening sequentially arranged in a direction away from the compressor assembly, the second opening is coupled between one of the circular flow channels and the filling tube, and the third opening is coupled between the other circular flow channel and the guide tube.

The effect achieved by the invention is that the high-pressure coolant can be delivered sequentially from the storage tank, the filling tube, the cooling passage, the guide tube, and the first opening to the compression chamber by pressure difference, and finally the coolant within the compression chamber will be circulated to the storage tank through the tubes. Thus, the pump components to pump the coolant for cooling the motor can be omitted.

Another effect achieved by the invention is that the coolant within the cooling passage flows upwardly from the bottom, avoiding that the coolant flows too fast due to the force of gravity, and thus the drive motor assembly would not be cooled timely and the mixed air would be easily deteriorated.

Another effect of the invention is that the centering bushing is used to substitute the conventional drive shaft. Since the centering bushing no longer require bearings or bearing driving parts, therefore the space for accommodating such bearings or bearing driving parts can be saved, the overall volume of the rotary screw compressor can be decreased, the structure can be simplified, and the transmission loss can be reduced.

Since both ends of the centering bushing require no lubrication of coolant, therefore the coolant can flow through the motor housing to cool the drive motor assembly without passing through both ends of the centering bushing. As a result, the coolant is prevented from permeating from both ends of the centering bushing into the motor housing, and the service life of the drive motor assembly can be extended.

### BRIEF DESCRIPTION OF THE DRAWINGS

FIG. 1 is an exploded view of a rotary screw compressor of this invention;
FIG. 2 is a perspective view of a rotary screw compressor of this invention;
FIG. 3 is a cross-sectional view of a rotary screw compressor of this invention;
FIG. 4 is a side view of a rotary screw compressor of this invention;
FIG. 5 is a perspective view of a motor housing of this invention;
FIG. 6 is a cross-sectional view of a motor housing of this invention; and
FIG. 7 is a perspective view of a motor housing in accordance to an alternative solution according to the invention.

### DESCRIPTION OF THE PREFERRED EMBODIMENTS

The technical contents of this disclosure will become apparent with the detailed description of preferred embodiments accompanied with the illustration of related drawings as follows. It is intended that the embodiments and drawings disclosed herein are to be considered illustrative rather than restrictive.

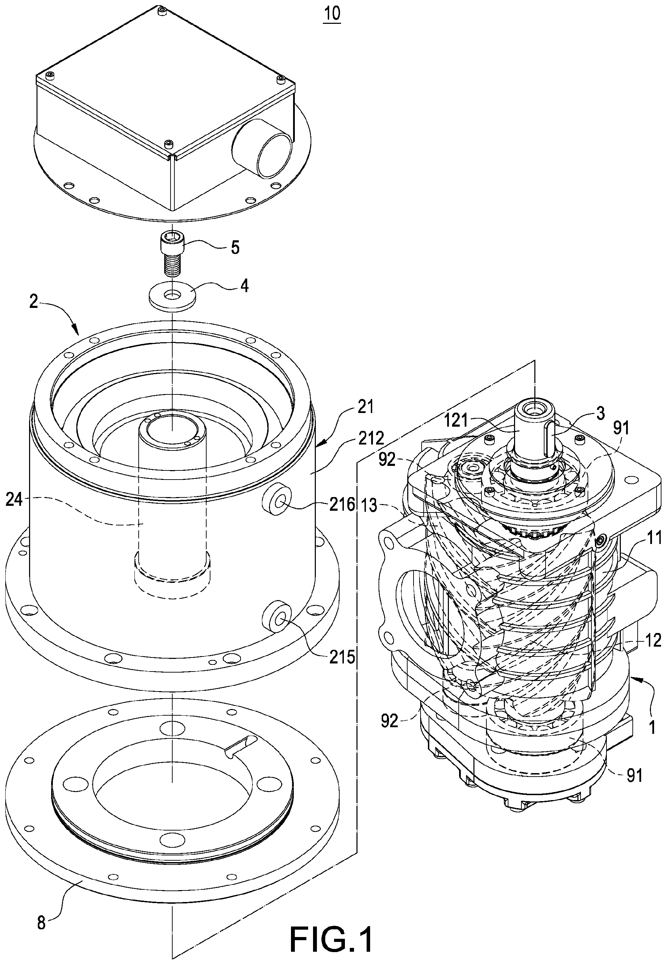

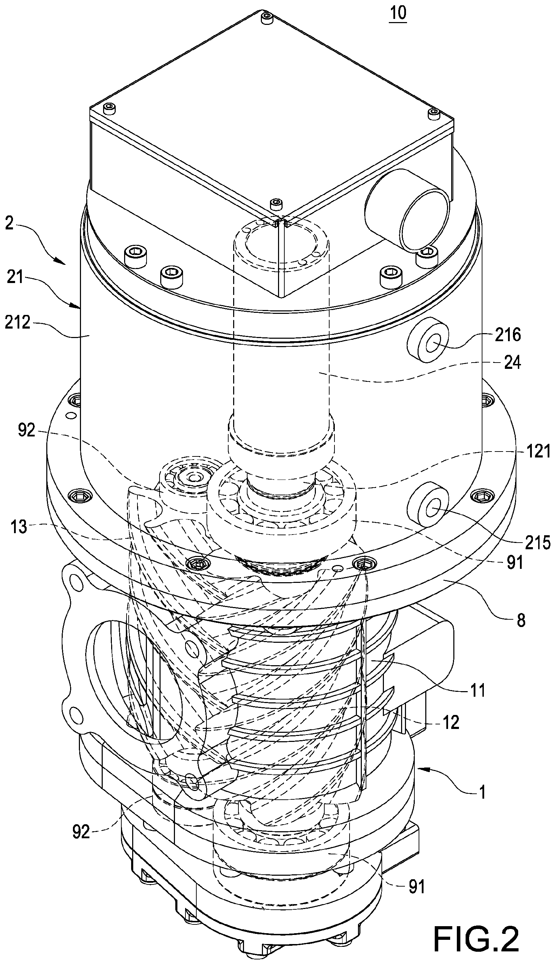

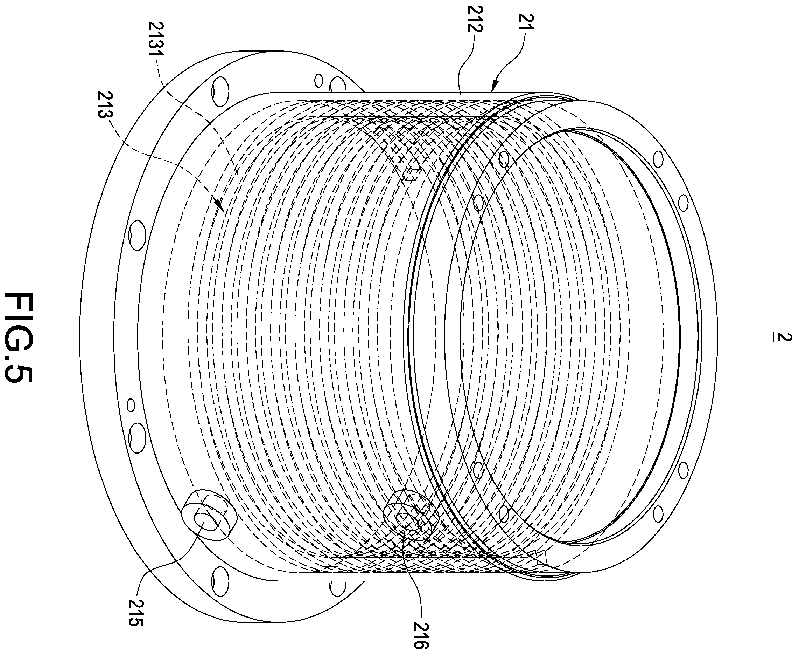

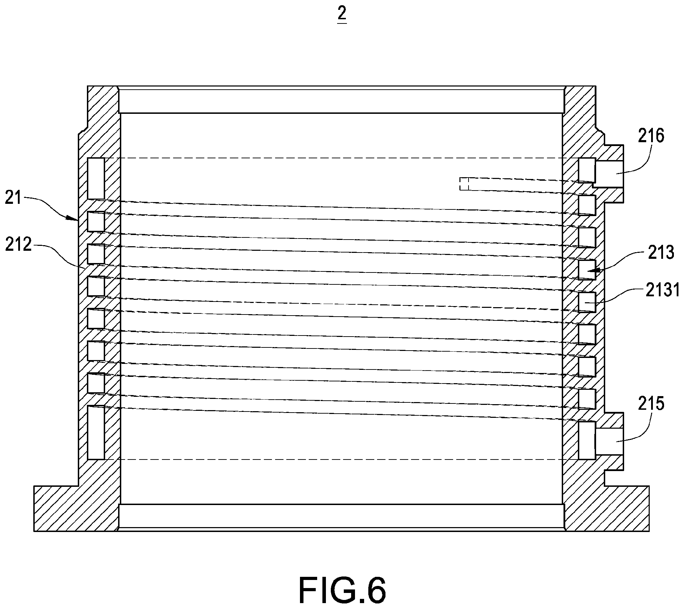

With reference to FIGS. 1 to 6 for a rotary screw compressor of this disclosure, the rotary screw compressor 10 comprises a compressor assembly 1 and a drive motor assembly 2.

As shown in FIGS. 1 to 4, the compressor assembly 1 comprises a compressor housing 11 installed in the compressor housing 11, and a first screw rotor 12 and a second screw rotor 13 engaged with each other, and an end of the first screw rotor 12 has an engaging end 121. Wherein, the compressor housing 11 has a compression chamber 111 for accommodating the first screw rotor 12 and the second screw rotor 13.

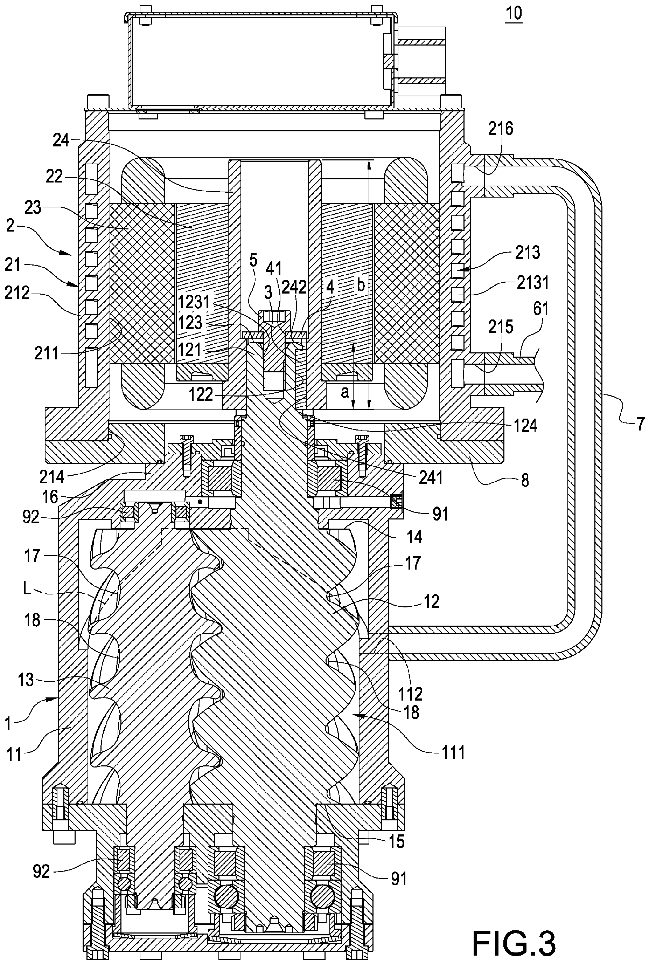

Referring to FIG. 3, both ends of the first screw rotor 12 and the second screw rotor 13 have an air suction end 14 and an air exhaust end 15 respectively, and a sealing line L is defined between the air suction end 14 and the air exhaust end 15, and the area between the air exhaust end 15 and the sealing line L is defined as a compression operation area, and the area between the air suction end 14 and the sealing line L is defined as an initial compression operation area.

Further, the first screw rotor 12 and the second screw rotor 13 has a first spiral groove 17 and a second spiral groove 18 counting from the air suction end 14, and the initial compression area is substantially disposed between the air suction end 14 and the second spiral groove 18.

As shown in FIGS. 1 to 6, the drive motor assembly 2 comprises a motor housing 21, a motor stator 23, a centering bushing 24 and a motor rotor 22 installed in the motor housing 21, and the motor stator 23 is installed to an outer side of the motor rotor 22, and the motor stator 23 drives the motor rotor 22 to rotate by the principle of electromagnetic induction, and the centering bushing 24 is coupled to the motor rotor 22 in a tight fit manner, and has an end for accommodating the engaging end 121 in the tight-fit manner, so that the motor rotor 22 can drive the centering bushing 24 to rotate, and the centering bushing 24 can drive the engaging end 121 to rotate, so that the motor rotor 22 can drive the first screw rotor 12 to rotate through the centering bushing 24 and the engaging end 121. The motor housing 21 has an inner surface 211 and an outer surface 212, and an air gap of 1mm is maintained between the motor rotor 22 and the motor stator 23, but the size is not limited to 1mm.

In the aforementioned tight fit method, the centering bushing 24 is passed and installed into the thermally expanded motor rotor 22, and the motor rotor 22 will be bounded tightly and naturally with the centering bushing 24 after cooling, and the engaging end 121 is passed and installed into the thermally expanded centering bushing 24, and the centering bushing 24 will be bounded tightly and naturally with the engaging end 121 after cooling. In FIGS. 1 and 3, the rotary screw compressor 10 of this disclosure further comprises an insert key 3, and the engaging end 121 has a first snap slot 122 formed along the axial direction thereof, and the centering bushing 24 has a second snap slot 241 formed along the axial direction thereof, and the insert key 3 is snapped into the first snap slot 122 and the second snap slot 241, and the first screw rotor 12 and the centering bushing 24 use the insert key 3 to perform a mechanical transmission, and an axial hole for the interference fit of the concentric alignment, so that the centering bushing 24 and the first screw rotor 12 can be fixed securely with each other and rotated jointly.

Further referring to FIGS. 1 and 3, the rotary screw compressor 10 of this disclosure further comprises a gasket 4 and a bolt 5, and the engaging end 121 has an extremity 123 and a stop block 124 extending therefrom, and the extremity 123 has a first through hole 1231, and the gasket 4 has a second through hole 41, and a protrusion 242 is extended from an inner periphery of the centering bushing 24, and the bolt 5 is locked into the first through hole 1231 and the second through hole 41, and the gasket 4 is clamped between the extremity 123, the protrusion 242 and the bolt 5, and the stop block 124 and the centering bushing 24 block and position with each other, so that the engaging end 121 has an end for blocking and limiting a position through the gasket 4 and the other end for blocking and limiting a position through the stop block 124, so as to connect the engaging end 121 into the centering bushing 24 stably.

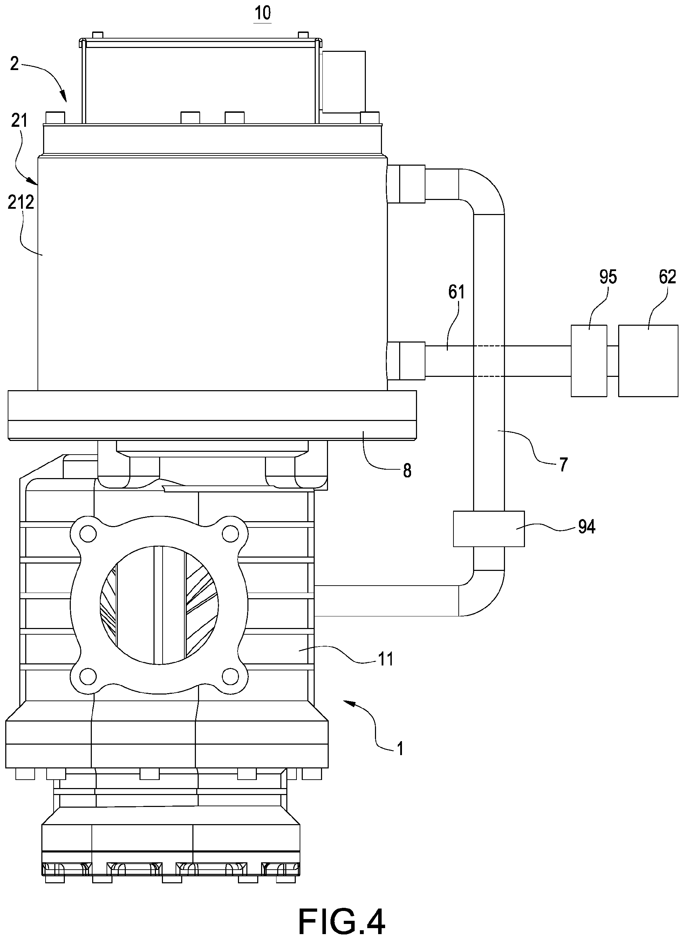

Referring to FIGS. 3 and 4, the rotary screw compressor 10 of the invention further comprises a filling tube 61, a storage tank 62 and a guide tube 7, and the motor housing 21 has a cooling passage 213 formed between the inner surface 211 and the outer surface 212, and the filling tube 61 has an end just communicating to the storage tank 62 only and the other end just communicating to the cooling passage 213 only, and the guide tube 7 has an end just communicating to the cooling passage 213 only and the other end just communicating to the compression chamber 111 only, and a coolant sequentially flows through the liquid tube 6, the cooling passage 213 and the guide tube 7 to the compression chamber 111, and the compressor housing 11 has a first opening 112 between the compression chamber 111 and the guide tube 7, and the first opening 112 is disposed between the first spiral groove 17 and the second spiral groove 18 of any one of the first screw rotor 12 and the second screw rotor 13. In other words, the first opening 112 of the compressor housing 11 is situated in the initial compression operation area, which is at a low to mid pressure area of the compression chamber 111.

Furthermore, the storage tank 62 is a high-pressure tank, and the air pressure within the storage tank 62 is greater than the air pressure between the first spiral groove 17 and the second spiral groove 18 of any one of the first screw rotor 12 and the second screw rotor 13. In other words, the air pressure within the storage tank 62 is greater than the air pressure of the aforementioned initial compression operation area, so that the high-pressure coolant can be delivered sequentially from the storage tank 62, the filling tube 61, the cooling passage 213, the guide tube 7, and the first opening 112 to the compression chamber 111 by pressure difference , and finally the coolant within the compression chamber 111 will be circulated to the storage tank 62 through the tubes, so that the process of pumping the coolant and the pump component are omitted, and the structure and the volume of the rotary screw compressor 10 is simplified as well. Referring to FIGS. 3, 5 and 6, the cooling passage 213 of this embodiment is a spiral flow channel 2131, and the spiral flow channel 2131 surrounds the outer periphery of the motor housing 21, and the motor housing 21 has a second opening 215 and a third opening 216 sequentially arranged in a direction away from the compressor assembly 1. In other words, the position of the third opening 216 is higher than the position of the second opening 215, and the second opening 215 is coupled between an end of the spiral flow channel 2131 and the filling tube 61, and the third opening 216 is coupled between the other end of the spiral flow channel 2131 and the guide tube 7, so that the coolant within the cooling passage 213 can flow upwardly from the bottom. Compared with the conventional method of the coolant flowing downwardly from the top, the coolant flow will be too fast due to the force of gravity, and thus the drive motor assembly 2 cannot be cooled timely and the mixed air may be easily deteriorated. In this disclosure, the coolant within the cooling passage 213 flows upwardly from the bottom provides a uniform flow that facilitates the cooling of the drive motor assembly 2 and prevents the deterioration of the mixed air. Referring to FIGS. 1 to 4, the rotary screw compressor 10 of this disclosure further comprises an annular positioning plate 8, and the motor housing 21 has a connection port 214 configured to be corresponsive to the compressor housing 11, and a bearing seat 16 extends from an end of the compressor housing 11, and the annular positioning plate 8 is sheathed on the outer periphery of the bearing seat 16 and installed to the inner circumference of the connection port 214 in an transition-fit manner. Since the center of the annular positioning plate 8 can be aligned precisely with the axis of the bearing seat 16 and the center of the connection port 214 easily, and the annular positioning plate 8 can be detachably sealed onto the connection port 214, so that the annular positioning plate 8 has the features of convenient installation, optimal concentricity, and high sealing and anti-leaking functions.

As to the transition-fit manner mentioned previously, the tolerance between the annular positioning plate 8, the bearing seat 16, and the connection port 214 is small, and if a force greater than a predetermined external force is exerted onto the annular positioning plate 8, the annular positioning plate 8 will be sheathed on the bearing seat 16 tightly and fixed into the connection port 214 securely.

In FIG. 3, the rotary screw compressor 10 of this disclosure further comprises two first bearings 91 and two second bearings 92 installed in the compressor housing 11, and the two first bearings 91 are disposed on both ends of the first screw rotor 12 respectively, so that both ends of the first screw rotor 12 can be positioned in the compressor housing 11 by the two first bearings 91, and the two second bearings 92 are disposed on both ends of the second screw rotor 13 respectively, so that both ends of the second screw rotor 13 can be positioned in the compressor housing 11 by the two second bearings 92, and one of the first bearings 91 is clamped between the bearing seat 16 and the first screw rotor 12. Since the bearing seat 16 is extended from and integrally formed with the compressor housing 11, the rotary screw compressor 10 is simplified and compact.

In FIG. 4, the rotary screw compressor 10 of this disclosure further comprises a filter 94 and a cooler 95, wherein the cooler 95 is installed at the filling tube 61, and the filter 94 is installed at the guide tube 7, and the filter 94 is provided for filtering impurities of the coolant and the cooler 95 for provided for cooling the coolant, so that the temperature of the coolant is low.

As shown in FIGS. 1 to 3, the motor rotor 22 of the rotary screw compressor 10 is provided for connecting the engaging end 121 of the first screw rotor 12 directly through the centering bushing 24, so that the first screw rotor 12 can drive the second screw rotor 13 to rotate for the operation of the compressor assembly 1. This centering bushing 24 is provided to substitute the conventional drive shaft, so that both ends of the centering bushing 24 no longer require any bearing or bearing driving part, so as to reduce the accommodation space and the overall volume of the rotary screw compressor 10. The structure of the rotary screw compressor 10 is simplified as well.

In addition, the centering bushing 24 require no bearing or bearing driving part, so that it is not necessary to lubricate the coolant at both ends of the centering bushing 24, and the filling tube 61 just communicates to the cooling passage 213 only, and the guide tube 7 has an end just communicating to the cooling passage 213 only and the other end just communicating to the compression chamber 111 only, so that the coolant can flow through the motor housing 21 in order to cool the drive motor assembly 2, and the coolant does not need to flow through both ends of the centering bushing 24, so as to prevent the coolant from permeating from both ends of the centering bushing 24 into the motor housing 21, and prevent the motor rotor 22 and the motor stator 23 from being overheated or damaged, and the dirt in the motor housing 21 will not enter into the compression chamber 111, so as to extend the service life of the drive motor assembly 1.

In addition, the conventional drive shaft drives the spiral rotor to rotate by the bearing driving part, so that there will be a transmission loss. On the other hand, the motor rotor 22 of this disclosure directly connects the centering bushing 24 with the engaging end 121 of the first screw rotor 12 to reduce the transmission loss.

Further, the annular positioning plate 8 is installed between the compressor housing 11 and the motor housing 21. In other words, the annular positioning plate 8 is provided to integrate two independent assemblies (which are the compressor assembly 1 and the drive motor assembly 2) into a whole compressor assembly, so as to further reduce the volume of the rotary screw compressor 10.

In addition, the compressor assembly 1 and the drive motor assembly 2 according to the invention are disposed in upright fashion with respect to each other.

When the compressor assembly 1 and the drive motor assembly 2 are configured to be implemented in upright fashion with respect to each other, the engaging end 121 has a length ranging from one-third to half of the centering bushing 24, so that the mass of the centering bushing 24 is reduced and the center of gravity of the whole motor rotor 22 is lowered to prevent resonance occurred during the rotation of the motor rotor 22.

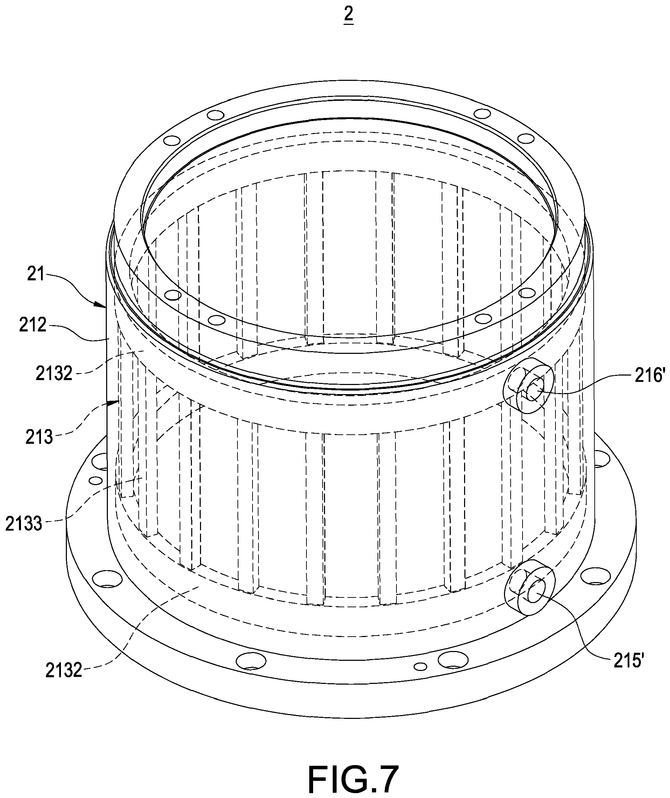

An alternative solution of the cooling passage 213 according to the invention is shown in FIG. 7.

Specifically, the cooling passage 213 comprises two circular flow channels 2132 and a plurality of straight flow channels 2133 coupled between the two circular flow channels 2132, and the plurality of straight flow channels 2133 is configured to be parallel to the axial direction of the motor housing 21, and the motor housing 21 has a second opening 215' and a third opening 216' arranged sequentially in a direction away from the compressor assembly 1. In other words, the position of the third opening 216' is higher than the position of the second opening 215', and the second opening 215' is coupled between one of the circular flow channels 2132 and the filling tube 61, and the third opening 216' is coupled between the other circular flow channel 2132 and the guide tube 7, so that the coolant at the cooling passage 213 flows upwardly from the bottom to achieve the same effects and functions as those of the previous solution illustrated in FIGS. 1 to 6.

## Claims

1. A rotary screw compressor, comprising:
a compressor assembly (1), comprising a compressor housing (11), a first screw rotor (12) and a second screw rotor (13) installed in the compressor housing (11) and engaged with each other, an end of the first screw rotor (12) having an engaging end (121), the compressor housing (11) having a compression chamber (111) for accommodating the first screw rotor (12) and the second screw rotor (13), both ends of the first screw rotor (12) and the second screw rotor (13) have an air suction end (14) and an air exhaust end (15) respectively, and the first screw rotor (12) and the second screw rotor (13) have a first spiral groove (17) and a second spiral groove (18) from the air suction end (14) respectively;
a drive motor assembly (2) comprising a motor housing (21) and a motor rotor (22), a motor stator (23) and a centering bushing (24) installed in the motor housing (21), the motor stator (23) being installed within the motor rotor (22) and capable of driving the motor rotor (22) to rotate, the centering bushing (24) being coupled to the inner circumference of the motor rotor (22) and having an end for accommodating the engaging end (121), so that the motor rotor (22) can drive the first screw rotor (12) to rotate through the centering bushing (24) and the engaging end (121), and the motor housing (21) having an inner surface (211), an outer surface (212), and a cooling passage (213) disposed between the inner surface (211) and the outer surface (212);
a filling tube (61);
a storage tank (62); and
a guide tube (7);
wherein the filling tube (61) having an end communicating to the storage tank (62) and the other end communicating to the cooling passage (213), the guide tube (7) having an end communicating to the cooling passage (213) and the other end communicating to the compression chamber (111), and **characterized in that** the compressor housing (11) having a first opening (112) coupled between the compression chamber (111) and the guide tube (7), the first opening (112) is situated between the first spiral groove (17) and the second spiral groove (18) of any one of the first screw rotor (12) and the second screw rotor (13), the cooling passage (213) is a spiral flow channel (2131), the spiral flow channel (2131) surrounds the outer periphery of the motor housing (21), the motor housing (21) has a second opening (215) and a third opening (216) sequentially arranged in a direction away from the compressor assembly (1), the second opening (215) is coupled between an end of the spiral flow channel (2131) and the filling tube (61), and the third opening (216) is coupled between the other end of the spiral flow channel (2131) and the guide tube (7);
wherein the compressor assembly (1) and the drive motor assembly (2) are disposed in upright fashion with respect to each other,
and the storage tank (62) has an internal pressure greater than the air pressure between the first spiral groove (17) and the second spiral groove (18) of any one of the first screw rotor (12) and the second screw rotor (13), so that a coolant can be delivered sequentially from the storage tank (62), the filling tube (61), the cooling passage (213), the guide tube (7), and the first opening (112) to the compression chamber (111) by pressure difference, the coolant within the cooling passage (213) can flow upwardly.

2. A rotary screw compressor, comprising:
a compressor assembly (1), comprising a compressor housing (11), a first screw rotor (12) and a second screw rotor (13) installed in the compressor housing (11) and engaged with each other, an end of the first screw rotor (12) having an engaging end (121), the compressor housing (11) having a compression chamber (111) for accommodating the first screw rotor (12) and the second screw rotor (13), both ends of the first screw rotor (12) and the second screw rotor (13) have an air suction end (14) and an air exhaust end (15) respectively, and the first screw rotor (12) and the second screw rotor (13) have a first spiral groove (17) and a second spiral groove (18) from the air suction end (14) respectively ;
a drive motor assembly (2) comprising a motor housing (21), a motor rotor (22), a motor stator (23) and a centering bushing (24) installed in the motor housing (21), the motor stator (23) being installed within the motor rotor (22) and capable of driving the motor rotor (22) to rotate, the centering bushing (24) being coupled to the inner circumference of the motor rotor (22) and having an end for accommodating the engaging end (121), so that the motor rotor (22) can drive the first screw rotor (12) to rotate through the centering bushing (24) and the engaging end (121), the motor housing (21) having an inner surface (211), an outer surface (212), and a cooling passage (213) disposed between the inner surface (211) and the outer surface (212);
a filling tube (61);
a storage tank (62); and
a guide tube (7);
wherein the filling tube (61) having an end communicating to the storage tank (62) and the other end communicating to the cooling passage (213), the guide tube (7) having an end communicating to the cooling passage (213) and the other end communicating to the compression chamber (111), **characterized in that** the compressor housing (11) having a first opening (112) coupled between the compression chamber (111) and the guide tube (7), the first opening (112) is situated between the first spiral groove (17) and the second spiral groove (18) of any one of the first screw rotor (12) and the second screw rotor (13), the cooling passage (213) comprises two circular flow channels (2132) and a plurality of straight flow channels (2133) coupled between the two circular flow channels (2132), the plurality of straight flow channels (2133) extend in a direction parallel to axis of the motor housing (21), the motor housing (21) has a second opening (215') and a third opening (216') sequentially arranged in a direction away from the compressor assembly (1), the second opening (215') is coupled between one of the circular flow channels (2132) and the filling tube (61), and the third opening (216') is coupled between the other circular flow channel (2132) and the guide tube (7);
wherein the compressor assembly (1) and the drive motor assembly (2) are disposed in upright fashion with respect to each other, and the storage tank (62) has an internal pressure greater than the air pressure between the first spiral groove (17) and the second spiral groove (18) of any one of the first screw rotor (12) and the second screw rotor (13), so that a coolant can be delivered sequentially from the storage tank (62), the filling tube (61), the cooling passage (213), the guide tube (7), and the first opening (112) to the compression chamber (111) by pressure difference, the coolant within the cooling passage (213) can flow upwardly.

3. The rotary screw compressor as claimed in claim 1 or 2, wherein the engaging end (121) has a length (a) ranging from one-third to half of the length of the centering bushing (24).

4. The rotary screw compressor as claimed in claim 1 or 2, further comprising an insert key (3), and the engaging end (121) having a first snap slot (122) formed along the axis thereof, and the centering bushing (24) having a second snap slot (241) formed along the axis thereof, and the insert key (3) being snapped into the first snap slot (122) and the second snap slot (241).

5. The rotary screw compressor as claimed in claim 1 or 2, further comprising a gasket (4) and a bolt (5), and the engaging end (121) having an extremity (123) and a stop block (124) extending therefrom, and the extremity (123) having a first through hole (1231), and the gasket (4) having a second through hole (41), and a protrusion (242) being protruded from an inner periphery of the centering bushing (24), and the bolt (5) being locked to the first through hole (1231) and the second through hole (41), and the gasket (4) being clamped between the extremity (123), the protrusion (242) and the bolt (5), and the stop block (124) and the centering bushing (24) blocking and positioning with each other.

6. The rotary screw compressor as claimed in claims 1 or 2, further comprising a filter (94) and a cooler (95), the cooler (95) being installed at the filling tube (61), and the filter (94) being installed at the guide tube (7).

7. The rotary screw compressor as claimed in-claims 1 or 2, further comprising an annular positioning plate (8), and the motor housing (21) having a connection port (214) corresponding to the compressor housing (11), and a bearing seat (16) extending from an end of the compressor housing (11), and the annular positioning plate (8) being sheathed on the outer periphery of the bearing seat (16) and passed into the inner circumference of the connection port (214) in a transition-fit manner, and the annular positioning plate (8) being detachably sealed onto the connection port (214).

8. The rotary screw compressor as claimed in claim 7, further comprising two first bearings (91) and two second bearings (92) accommodated in the compressor housing (11), and the two first bearings (91) being disposed on both ends of the first screw rotor (12) respectively, and the two second bearings (92) being disposed on both ends of the second screw rotor (13) respectively, and one of the first bearings (91) being clamped between the bearing seat (16) and the first screw rotor (12).

## Patentansprüche

1. Ein rotierender Schraubenkompressor, bestehend aus:
Einer Kompressorbaugruppe (1), umfassend ein Kompressorgehäuse (11), einen ersten Schraubenrotor (12) und einen zweiten Schraubenrotor (13), die in dem Kompressorgehäuse (11) installiert sind und miteinander in Eingriff stehen, wobei ein Ende des ersten Schraubenrotors (12) ein Eingriffsende (121) aufweist, wobei das Kompressorgehäuse (11) eine Kompressionskammer (111) zur Aufnahme des ersten Schraubenrotors (12) und des zweiten Schraubenrotors (13) aufweist, beide Enden des ersten Schraubenrotors (12) und des zweiten Schraubenrotors (13) jeweils ein Luftansaugende (14) ein Luftauslassende (15) haben, und der erste Schraubenrotor (12) und der zweite Schraubenrotor (13) jeweils eine erste Spiralnut (17) und eine zweite Spiralnut (18) von dem Luftansaugende (14) haben;
Einer Antriebsmotoranordnung (2) mit einem Motorgehäuse (21) und einem Motorrotor (22), einem Motorstator (23) und einer Zentrierbuchse (24), die in dem Motorgehäuse (21) installiert sind, wobei der Motorstator (23) in dem Motorrotor (22) installiert ist und in der Lage ist, den Motorrotor (22) zur Drehung anzutreiben, wobei die Zentrierbuchse (24) mit dem Innenumfang des Motorrotors (22) gekoppelt ist und ein Ende zur Aufnahme des Eingriffsendes (121) aufweist, so dass der Motorrotor (22) den ersten Schraubenrotor (12) antreiben kann, um sich durch die Zentrierbuchse (24) und das Eingriffsende (121) zu drehen, und das Motorgehäuse (21) eine Innenfläche (211), eine Außenfläche (212) und einen Kühlkanal (213) aufweist, der zwischen der Innenfläche (211) und der Außenfläche (212) angeordnet ist;
ein Füllrohr (61);
einen Vorratstank (62); und
ein Führungsrohr (7);
wobei das Füllrohr (61) ein Ende hat, das mit dem Vorratsbehälter (62) in Verbindung steht, und das andere Ende mit dem Kühlkanal (213) in Verbindung steht, wobei das Führungsrohr (7) ein Ende hat, das mit dem Kühlkanal (213) in Verbindung steht, und das andere Ende mit der Kompressionskammer (111) in Verbindung steht, und **dadurch gekennzeichnet, dass** das Kompressorgehäuse (11) eine erste Öffnung (112) aufweist, die zwischen die Kompressionskammer (111) und das Führungsrohr (7) gekoppelt ist, wobei die erste Öffnung (112) zwischen der ersten Spiralnut (17) und der zweiten Spiralnut (18) des ersten Schraubenrotors (12) oder des zweiten Schraubenrotors (13) angeordnet ist, der Kühlkanal (213) ein spiralförmiger Strömungskanal (2131) ist, der spiralförmige Strömungskanal (2131) den Außenumfang des Motorgehäuses (21) umgibt, das Motorgehäuse (21) eine zweite Öffnung (215) und eine dritte Öffnung (216) aufweist, die aufeinanderfolgend in einer Richtung weg von der Kompressorbaugruppe (1) angeordnet sind, die zweite Öffnung (215) zwischen ein Ende des spiralförmiger Strömungskanals (2131) und das Füllrohr (61) gekoppelt ist, und die dritte Öffnung (216) zwischen das andere Ende des spiralförmigen Strömungskanals (2131) und das Führungsrohr (7) gekoppelt ist;
wobei die Kompressorbaugruppe (1) und die Antriebsmotoreinheit (2) aufrecht zueinander angeordnet sind,
und der Vorratstank (62) einen Innendruck aufweist, der größer ist als der Luftdruck zwischen der ersten Spiralnut (17) und der zweiten Spiralnut (18) des ersten Schraubenrotors (12) oder des zweiten Schraubenrotors (13), so dass ein Kühlmittel nacheinander aus dem Vorratstank (62), dem Füllrohr (61), dem Kühlkanal (213), dem Führungsrohr (7) und der ersten Öffnung (112) durch Druckdifferenz in den Kompressionsraum (111) gefördert werden kann, wobei das Kühlmittel im Kühlkanal (213) nach oben fließen kann.

2. Ein rotierender Schraubenkompressor, bestehend aus:
Kompressorbaugruppe (1), umfassend ein Kompressorgehäuse (11), einen ersten Schraubenrotor (12) und einen zweiten Schraubenrotor (13), die in dem Kompressorgehäuse (11) installiert sind und miteinander in Eingriff stehen, wobei ein Ende des ersten Schraubenrotors (12) ein Eingriffsende (121) aufweist, wobei das Kompressorgehäuse (11) eine Kompressionskammer (111) zur Aufnahme des ersten Schraubenrotors (12) und des zweiten Schraubenrotors (13) aufweist, beide Enden des ersten Schraubenrotors (12) und des zweiten Schraubenrotors (13) jeweils ein Luftansaugende (14) ein Luftauslassende (15) haben, und der erste Schraubenrotor (12) und der zweite Schraubenrotor (13) jeweils eine erste Spiralnut (17) eine zweite Spiralnut (18) von dem Luftansaugende (14) haben;
Antriebsmotoranordnung (2) mit einem Motorgehäuse (21), einem Motorrotor (22), einem Motorstator (23) und einer Zentrierbuchse (24), die in dem Motorgehäuse (21) installiert ist, wobei der Motorstator (23) in dem Motorrotor (22) installiert ist und in der Lage ist, den Motorrotor (22) zur Drehung anzutreiben, wobei die Zentrierbuchse (24) mit dem Innenumfang des Motorrotors (22) gekoppelt ist und ein Ende zur Aufnahme des Eingriffsendes (121) aufweist, so dass der Motorrotor (22) den ersten Schraubenrotor (12) antreiben kann, um sich durch die Zentrierbuchse (24) und das Eingriffsende (121) zu drehen, wobei das Motorgehäuse (21) eine Innenfläche (211), eine Außenfläche (212) und einen Kühlkanal (213) aufweist, der zwischen der Innenfläche (211) und der Außenfläche (212) angeordnet ist;
ein Füllrohr (61);
einen Vorratstank (62); und
ein Führungsrohr (7);
wobei das Füllrohr (61) ein Ende hat, das mit dem Vorratsbehälter (62) in Verbindung steht, und das andere Ende mit dem Kühlkanal (213) in Verbindung steht, wobei das Führungsrohr (7) ein Ende hat, das mit dem Kühlkanal (213) in Verbindung steht, und das andere Ende mit der Kompressionskammer (111) in Verbindung steht, **dadurch gekennzeichnet, dass** das Kompressorgehäuse (11) eine erste Öffnung (112) aufweist, die zwischen die Kompressionskammer (111) und das Führungsrohr (7) gekoppelt ist, wobei die erste Öffnung (112) zwischen der ersten Spiralnut (17) und der zweiten Spiralnut (18) des ersten Schraubenrotors (12) oder des zweiten Schraubenrotors (13) angeordnet ist, der Kühlkanal (213) zwei kreisförmige Strömungskanäle (2132) und eine Vielzahl von geraden Strömungskanälen (2133) umfasst, die zwischen den beiden kreisförmigen Strömungskanälen (2132) angeschlossen sind, wobei sich die Vielzahl von geraden Strömungskanälen (2133) in einer Richtung parallel zur Achse des Motorgehäuses (21) erstreckt, das Motorgehäuse (21) eine zweite Öffnung (215') und eine dritte Öffnung (216') aufweist, die aufeinanderfolgend in einer Richtung weg von der Kompressorbaugruppe (1) angeordnet sind, die zweite Öffnung (215') zwischen einem der kreisförmigen Strömungskanäle (2132) und dem Füllrohr (61) gekoppelt ist, und die dritte Öffnung (216') zwischen dem anderen kreisförmigen Strömungskanal (2132) und dem Führungsrohr (7) gekoppelt ist;
wobei die Kompressorbaugruppe (1) und die Antriebsmotoranordnung (2) aufrecht zueinander angeordnet sind und der Vorratsbehälter (62) einen Innendruck aufweist, der größer ist als der Luftdruck zwischen der ersten Spiralnut (17) und der zweiten Spiralnut (18) des ersten Schraubenrotors (12) oder des zweiten Schraubenrotors (13), so dass ein Kühlmittel nacheinander von dem Vorratsbehälter (62), dem Füllrohr (61), dem Kühlkanal (213), dem Führungsrohr (7) und der ersten Öffnung (112) zu der Kompressionskammer (111) durch Druckunterschied geliefert werden kann, wobei das Kühlmittel innerhalb des Kühlkanals (213) nach oben fließen kann.

3. Der rotierende Schraubenkompressor nach Anspruch 1 oder 2, wobei das Eingriffsende (121) eine Länge (a) im Bereich von einem Drittel bis zur Hälfte der Länge der Zentrierbuchse (24) aufweist.

4. Der Rotierende Schraubenkompressor nach Anspruch 1 oder 2, der ferner einen Einsatzkeil (3) umfasst, wobei das Eingriffsende (121) einen ersten Schnappschlitz (122) aufweist, der entlang seiner Achse ausgebildet ist, und die Zentrierbuchse (24) einen zweiten Schnappschlitz (241) aufweist, der entlang ihrer Achse ausgebildet ist, und der Einsatzkeil (3) in den ersten Schnappschlitz (122) und den zweiten Schnappschlitz (241) eingeschnappt ist.

5. Der Rotierende Schraubenkompressor nach Anspruch 1 oder 2, ferner mit einer Dichtung (4) und einem Bolzen (5), wobei das Eingriffsende (121) ein Ende (123) und einen sich davon erstreckenden Anschlagblock (124) aufweist und das Ende (123) ein erstes Durchgangsloch (1231) und die Dichtung (4) ein zweites Durchgangsloch (41) aufweist, und ein Vorsprung (242) von einem inneren Umfang der Zentrierbuchse (24) vorsteht, und der Bolzen (5) mit dem ersten Durchgangsloch (1231) und dem zweiten Durchgangsloch (41) verriegelt ist, und die Dichtung (4) zwischen dem Ende (123), dem Vorsprung (242) und dem Bolzen (5) eingeklemmt ist, und der Anschlagblock (124) und die Zentrierbuchse (24) einander blockieren und positionieren.

6. Der rotierende Schraubenkompressor nach Anspruch 1 oder 2, ferner mit einem Filter (94) und einem Kühler (95), wobei der Kühler (95) am Füllrohr (61) und der Filter (94) am Führungsrohr (7) angebracht ist.

7. Der rotierende Schraubenkompressor nach Anspruch 1 oder 2, ferner mit einer ringförmigen Positionierplatte (8), wobei das Motorgehäuse (21) eine mit dem Kompressorgehäuse (11) korrespondierende Anschlussöffnung (214) und einen von einem Ende des Kompressorgehäuses (11) ausgehenden Lagersitz (16) aufweist, und die ringförmige Positionierplatte (8) am Außenumfang des Lagersitzes (16) ummantelt ist und übergangsweise in den Innenumfang des Anschlussstutzens (214) übergeht, und die ringförmige Positionierplatte (8) lösbar auf den Anschlussstutzen (214) abgedichtet ist.

8. Der rotierende Schraubenkompressor nach Anspruch 7, ferner mit zwei ersten Lagern (91) und zwei zweiten Lagern (92), die in dem Kompressorgehäuse (11) untergebracht sind, wobei die beiden ersten Lager (91) jeweils an beiden Enden des ersten Schraubenrotors (12) und die beiden zweiten Lager (92) jeweils an beiden Enden des zweiten Schraubenrotors (13) angeordnet sind und eines der ersten Lager (91) zwischen dem Lagersitz (16) und dem ersten Schraubenrotor (12) eingeklemmt ist.

## Revendications

1. Un compresseur rotatif à vis, comprenant
Un ensemble de compresseur (1) comprenant un boîtier de compresseur (11), un premier rotor à vis (12) et un second rotor à vis (13) installés dans le boîtier de compresseur (11) et en prise l'un avec l'autre, une extrémité du premier rotor à vis (12) ayant une extrémité de prise (121), le boîtier de compresseur (11) ayant une chambre de compression (111) pour recevoir le premier rotor à vis (12) et le second rotor à vis (13), les deux extrémités du premier rotor à vis (12) et du second rotor à vis (13) ont chacune une extrémité d'aspiration d'air (14) et une extrémité de sortie d'air (15), et le premier rotor à vis (12) et le second rotor à vis (13) ont chacun une première rainure en spirale (17) et une seconde rainure en spirale (18) à partir de l'extrémité d'aspiration d'air (14) ;
un ensemble de moteur d'entraînement (2) comprenant un carter de moteur (21) et un rotor de moteur (22), un stator de moteur (23) et une douille de centrage (24) installés dans le carter de moteur (21), le stator de moteur (23) étant installé dans le rotor de moteur (22) et étant capable d'entraîner le rotor de moteur (22) en rotation, la douille de centrage (24) étant couplée à la périphérie interne du rotor de moteur (22) et ayant une extrémité pour recevoir l'extrémité d'engagement (121), de sorte que le rotor du moteur (22) peut entraîner le premier rotor à vis (12) pour tourner à travers la douille de centrage (24) et l'extrémité d'engagement (121), et le carter de moteur (21) comprend une surface intérieure (211), une surface extérieure (212) et un canal de refroidissement (213) disposé entre la surface intérieure (211) et la surface extérieure (212) ;
un tube de remplissage (61) ;
un réservoir de stockage (62) ; et
un tube de guidage (7) ;
dans lequel le tube de remplissage (61) a une extrémité qui communique avec le réservoir (62) et l'autre extrémité qui communique avec le passage de refroidissement (213), dans lequel le tube de guidage (7) a une extrémité qui communique avec le passage de refroidissement (213) et l'autre extrémité qui communique avec la chambre de compression (111), et **caractérisé en ce que** le boîtier de compresseur (11) comprend une première ouverture (112) couplée entre la chambre de compression (111) et le tube de guidage (7), la première ouverture (112) étant située entre la première rainure en spirale (17) et la deuxième rainure en spirale (18) du premier rotor à vis (12) ou du deuxième rotor à vis (13), le canal de refroidissement (213) étant un canal d'écoulement en forme de spirale (2131), le canal d'écoulement en forme de spirale (2131) entourant la périphérie extérieure du carter de moteur (21), le carter de moteur (21) comprend une deuxième ouverture (215) et une troisième ouverture (216) disposées successivement dans une direction s'éloignant de l'ensemble de compresseur (1), la deuxième ouverture (215) est couplée entre une extrémité du canal d'écoulement en spirale (2131) et le tube de remplissage (61), et la troisième ouverture (216) est couplée entre l'autre extrémité du canal d'écoulement en spirale (2131) et le tube de guidage (7) ;
dans lequel l'ensemble de compresseur (1) et l'ensemble de moteur d'entraînement (2) sont disposés verticalement l'un par rapport à l'autre,
et le réservoir de stockage (62) présente une pression interne qui est supérieure à la pression atmosphérique entre la première rainure en spirale (17) et la deuxième rainure en spirale (18) du premier rotor à vis (12) ou du deuxième rotor à vis (13), de sorte qu'un agent réfrigérant peut être extrait successivement du réservoir de stockage (62), du tube de remplissage (61), du canal de refroidissement (213), du tube de guidage (7) et de la première ouverture (112) peut être transporté par différence de pression dans la chambre de compression (111), le liquide de refroidissement pouvant s'écouler vers le haut dans le canal de refroidissement (213).

2. Un compresseur rotatif à vis, comprenant
Ensemble de compresseur (1) comprenant un boîtier de compresseur (11), un premier rotor à vis (12) et un second rotor à vis (13) installés dans le boîtier de compresseur (11) et en prise l'un avec l'autre, une extrémité du premier rotor à vis (12) ayant une extrémité de prise (121), le boîtier de compresseur (11) ayant une chambre de compression (111) pour recevoir le premier rotor à vis (12) et le second rotor à vis (13), les deux extrémités du premier rotor à vis (12) et du deuxième rotor à vis (13) ont chacune une extrémité d'aspiration d'air (14) une extrémité de sortie d'air (15), et le premier rotor à vis (12) et le deuxième rotor à vis (13) ont chacun une première rainure en spirale (17) une deuxième rainure en spirale (18) de l'extrémité d'aspiration d'air (14) ;
Ensemble de moteur d'entraînement (2) comprenant un carter de moteur (21), un rotor de moteur (22), un stator de moteur (23) et une douille de centrage (24) installée dans le carter de moteur (21), le stator de moteur (23) étant installé dans le rotor de moteur (22) et étant capable d'entraîner le rotor de moteur (22) en rotation, la douille de centrage (24) étant couplée à la périphérie interne du rotor de moteur (22) et ayant une extrémité pour recevoir l'extrémité d'engagement (121), de sorte que le rotor du moteur (22) peut entraîner le premier rotor à vis (12) pour tourner à travers la douille de centrage (24) et l'extrémité d'engagement (121), dans lequel le carter du moteur (21) comprend une surface intérieure (211), une surface extérieure (212) et un canal de refroidissement (213) disposé entre la surface intérieure (211) et la surface extérieure (212) ;
un tube de remplissage (61) ;
un réservoir de stockage (62) ; et
un tube de guidage (7) ;
le tube de remplissage (61) ayant une extrémité qui communique avec le réservoir (62) et l'autre extrémité qui communique avec le canal de refroidissement (213), le tube de guidage (7) ayant une extrémité qui communique avec le canal de refroidissement (213) et l'autre extrémité qui communique avec la chambre de compression (111), **caractérisé, en ce que** le boîtier de compresseur (11) comprend une première ouverture (112) couplée entre la chambre de compression (111) et le tube de guidage (7), la première ouverture (112) étant située entre la première rainure en spirale (17) et la deuxième rainure en spirale (18) du premier rotor à vis (12) ou du deuxième rotor à vis (13), le canal de refroidissement (213) comprend deux canaux d'écoulement circulaires (2132) et une pluralité de canaux d'écoulement droits (2133) connectés entre les deux canaux d'écoulement circulaires (2132), la pluralité de canaux d'écoulement droits (2133) s'étendant dans une direction parallèle à l'axe du carter de moteur (21), le carter de moteur (21) ayant une deuxième ouverture (215') et une troisième ouverture (216'), qui sont disposées successivement dans une direction s'éloignant de l'ensemble de compresseur (1), la deuxième ouverture (215') étant couplée entre l'un des canaux d'écoulement circulaires (2132) et le tube de remplissage (61), et la troisième ouverture (216') étant couplée entre l'autre canal d'écoulement circulaire (2132) et le tube de guidage (7) ;
dans lequel l'ensemble compresseur (1) et l'ensemble moteur d'entraînement (2) sont disposés verticalement l'un par rapport à l'autre et le réservoir (62) a une pression interne supérieure à la pression d'air entre la première rainure en spirale (17) et la deuxième rainure en spirale (18) du premier rotor à vis (12) ou du deuxième rotor à vis (13), de sorte qu'un agent de refroidissement peut être fourni successivement depuis le réservoir (62), le tube de remplissage (61), le canal de refroidissement (213), le tube de guidage (7) et la première ouverture (112) à la chambre de compression (111) par différence de pression, l'agent de refroidissement pouvant s'écouler vers le haut à l'intérieur du canal de refroidissement (213).

3. Le compresseur rotatif à vis selon la revendication 1 ou 2, dans lequel l'extrémité d'engagement (121) a une longueur (a) dans la plage d'un tiers à la moitié de la longueur de la douille de centrage (24).

4. Le compresseur rotatif à vis selon la revendication 1 ou 2, comprenant en outre une clavette d'insertion (3), l'extrémité d'engagement (121) ayant une première fente d'encliquetage (122) formée le long de son axe, et la douille de centrage (24) ayant une seconde fente d'encliquetage (241) formée le long de son axe, et la clavette d'insertion (3) étant encliquetée dans la première fente d'encliquetage (122) et la seconde fente d'encliquetage (241).

5. Le compresseur rotatif à vis selon la revendication 1 ou 2, comprenant en outre un joint d'étanchéité (4) et un boulon (5), l'extrémité d'engagement (121) ayant une extrémité (123) et un bloc de butée (124) s'étendant à partir de celle-ci, l'extrémité (123) ayant un premier trou traversant (1231) et le joint d'étanchéité (4) ayant un deuxième trou traversant (41), et une saillie (242) fait saillie à partir d'une périphérie intérieure de la douille de centrage (24), et le boulon (5) est verrouillé avec le premier trou traversant (1231) et le second trou traversant (41), et le joint (4) est serré entre l'extrémité (123), la saillie (242) et le boulon (5), et le bloc de butée (124) et la douille de centrage (24) se bloquent et se positionnent mutuellement.

6. Le compresseur rotatif à vis selon la revendication 1 ou 2, comprenant en outre un filtre (94) et un refroidisseur (95), le refroidisseur (95) étant monté sur le tube de remplissage (61) et le filtre (94) sur le tube de guidage (7).

7. Le compresseur rotatif à vis selon la revendication 1 ou 2, comprenant en outre une plaque de positionnement annulaire (8), le carter de moteur (21) présentant une ouverture de raccordement (214) correspondant au carter de compresseur (11) et un siège de palier (16) partant d'une extrémité du carter de compresseur (11), et la plaque de positionnement annulaire (8) est enveloppée sur la périphérie extérieure du siège de palier (16) et se prolonge de manière transitoire dans la périphérie intérieure de la tubulure de raccordement (214), et la plaque de positionnement annulaire (8) est étanchéifiée de manière amovible sur la tubulure de raccordement (214) à partir de .

8. Le compresseur rotatif à vis selon la revendication 7, comprenant en outre deux premiers paliers (91) et deux seconds paliers (92) logés dans le carter de compresseur (11), les deux premiers paliers (91) étant disposés respectivement aux deux extrémités du premier rotor à vis (12) et les deux seconds paliers (92) étant disposés respectivement aux deux extrémités du second rotor à vis (13), l'un des premiers paliers (91) étant serré entre le siège de palier (16) et le premier rotor à vis (12).
